# EUROPEAN PATENT SPECIFICATION

(11) **EP 3 989 676 B1**
(45) Date of publication and mention of the grant of the patent: **02.12.2026**
(21) Application number: 20203657.0
(22) Date of filing: 23.10.2020
(51) Int. Cl.: H04W 84/00, H04B 7/185, H04W 48/08

(54) **METHOD FOR STEERING CELL MEASUREMENT AND/OR CELL SELECTION OF A USER EQUIPMENT IN A MOBILE COMMUNICATION NETWORK, USER EQUIPMENT, SYSTEM OR MOBILE COMMUNICATION NETWORK FOR REALIZING CELL MEASUREMENT AND/OR CELL SELECTION OF A USER EQUIPMENT, RADIO COVERAGE PREDICTION FUNCTION OR SERVER ENTITY, PROGRAM AND COMPUTER PROGRAM PRODUCT**
VERFAHREN ZUR STEUERUNG DER ZELLENMESSUNG UND/ODER ZELLENAUSWAHL EINES BENUTZERGERÄTES IN EINEM MOBILKOMMUNIKATIONSNETZ, BENUTZERGERÄT, SYSTEM ODER MOBILKOMMUNIKATIONSNETZ ZUR DURCHFÜHRUNG DER ZELLENMESSUNG UND/ODER ZELLENAUSWAHL EINES BENUTZERGERÄTES, FUNKABDECKUNGSVORHERSAGEFUNKTION ODER SERVER-EINHEIT, PROGRAMM UND COMPUTERPROGRAMMPRODUKT
PROCÉDÉ D'ORIENTATION DE MESURE DE CELLULE ET/OU DE SÉLECTION DE CELLULE D'UN ÉQUIPEMENT UTILISATEUR DANS UN RÉSEAU DE COMMUNICATION MOBILE, ÉQUIPEMENT UTILISATEUR, SYSTÈME OU RÉSEAU DE COMMUNICATION MOBILE POUR RÉALISER UNE MESURE DE CELLULE ET/OU UNE SÉLECTION D'UN ÉQUIPEMENT UTILISATEUR, FONCTION DE PRÉDICTION DE COUVERTURE RADIO OU ENTITÉ DE SERVEUR, PROGRAMME ET PRODUIT PROGRAMME INFORMATIQUE

(43) Date of publication of application: 27.04.2022
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- EP-A1- 2 882 231
- WO-A1-2019/132746

## Description

### BACKGROUND

The present invention relates a method for steering cell measurement and/or cell selection of a user equipment in or connected to or camping on a mobile communication network, wherein the mobile communication network comprises or uses or is associated or assigned to a radio access network comprising a plurality of radio cells and a plurality of base station entities providing these radio cells.

Furthermore, the present invention relates to a user equipment for steering cell measurement and/or cell selection, the user equipment being in or connected to or camping on a mobile communication network, comprising or using or being associated or assigned to a radio access network comprising a plurality of radio cells and a plurality of base station entities providing these radio cells.

Additionally, the present invention relates to a system or a mobile communication network, or a radio coverage prediction function or server entity thereof, for realizing cell measurement and/or cell selection of a user equipment in or connected to or camping on the mobile communication network, wherein the mobile communication network comprises or uses or is associated or assigned to a radio access network comprising a plurality of radio cells and a plurality of base station entities providing these radio cells.

Furthermore, the present invention relates to a program and to a computer-readable medium for steering cell measurement and/or cell selection of a user equipment in a mobile communication network according to the inventive method.

Unmanned Aerial Vehicles (UAVs) are of increased interest in the context of mobile networks and specifically in the context of 5G. One focus is on providing UAVs with 5G connectivity to provide 5G coverage, that would typically be offered by network operators of mobile communication networks (public land mobile networks), although private 5G networks may also use such possibilities.

One important aspect to be considered in such a case is that the base station entities, or gNodeBs, i.e. the elements providing the cell radio coverage, may be deployed as UAVs and as such, may not be static. Additionally, UAVs typically do not have, from the point of view of the user equipment, a predictable route or path, as opposed to, e.g., satellites providing 5G coverage (as satellites typically do not change their orbit suddenly and quickly).

In such a scenario, the entity that provides radio coverage to a user equipment (that is typically also more or less mobile) changes its location, and, hence, also the radio cell or the plurality of radio cells associated with (or provided by) such a coverage providing mobile entity will change its location or their locations. Additionally, user equipments and base station entities are typically managed by different entities, so joint full knowledge of the planned paths is not considered realistic.

Typically, user equipments need (or are configured such as) to perform cell measurements in order to find adequate or acceptable radio coverage, i.e. find a radio cell broadcasting a radio signal of sufficient quality and/or strength such that the considered user equipment is able to connect to such a radio cell and be provided with communication services from the mobile communication network in an acceptable manner. With radio coverage being provided by entities that are moving, i.e. more or less constantly changing their location, - and, additionally, not only changing their location but also in an unpredictable manner or along unpredictable paths - cell measurements might need to be performed more often, or even continuously, by user equipments in order to remain in coverage or to preserve radio coverage. The high relative velocities and three-dimensional mobility degree of freedom exacerbates this problem in the case of UAV deployments. It is evident that this leads to an increased energy consumption as well as increased requirements regarding processing capacities (within the user equipment) in order to perform such cell measurements or to perform such cell selection (measurements), and it would be beneficial to either avoid or at least reduce such additional cell selection measurements. In the context of time-dependent radio coverage EP 2 882 231 A1 describes a cell selection process in a cellular communication network that includes a mobile base station or repeater relay and in which the movement of the base station or repeater is handled by providing information about the time-dependent location change of the cell to the user equipment.

### SUMMARY

An object of the present invention is to provide a technically simple, effective and cost effective solution for steering cell measurement and/or cell selection of a user equipment in or connected to or camping on a mobile communication network. A further object of the present invention is to provide a corresponding user equipment, mobile communication network, radio coverage prediction function or server entity, and a corresponding program and computer-readable medium.

The object of the present invention is achieved by a method according to claim 1.

It is thereby advantageously possible according to the present invention that - by providing additional information to the user equipment (in the form of the radio coverage prediction information) - the number and/or the frequency of radio cell measurements that need to be performed by the user equipment is able to be reduced, and, hence, the energy consumption, especially of the user equipment (but potentially also of the base station entities), reduced. An additional advantage of providing the user equipment with additional information (in the form of the radio coverage prediction information) could be, at least potentially, that a better or enhanced level of quality-of-service (as a suitable radio cell might be found or detected, by the user equipment, more easily and more quickly) is able to be achieved, regarding the user equipment, by the mobile communication network.

It is conventionally known that (radio) cell measurements are often involved, e.g., in handover procedures.
In a situation where radio cells remain static (as, e.g., the cell tower (i.e. the base station entity) does not move) or follow a predictable path (such as, e.g., in the case of satellites), the user equipment is able (at least in principle, and implementation-dependent) to take into account any movements of its own with information previously stored by or within the user equipment to most effectively perform cell measurements; of course, the objective is (as always) to use time and energy in the most efficient way possible.
However, in the case where radio cells do not remain static, i.e. radio cells may move, and potentially at high speed and, additionally, with unpredictable paths (e.g. if cell coverage would be provided by drones), the user equipment may find itself in a position where it continuously has to perform cell searches (i.e. (cell selection) measurements) to remain in coverage. Additionally, the mobile communication network may find it difficult to perform an informed decision regarding handover in a situation where cells move in a - albeit known (at least by the mobile communication network or parts thereof) - nevertheless complex pattern and the user equipment is moving rather unpredictably (from the point of view of the mobile communication network).
As per the 3GPP 5G RAN specification TS 38.300 (NR; NR and NG-RAN Overall description), mobility between cells (i.e. regarding the mobility of user equipments between radio cells) depends on the connection state of the user equipment and/or a decision of the user equipment and/or a network decision: For user equipment-based handover, the user equipment needs to perform measurements to decide to which radio cell to handover (in 5G systems, based on the Cell selection is always based on CD-SSBs (cell-dependent synchronization signal and physical broadcast channel block) located on the synchronization raster). The user equipment may search each carrier in turn ("initial cell selection") or make use of stored information to shorten the search ("stored information cell selection"). For network-based handover, the network can decide to handover a given user equipment to a different target cell or beam.
TS 38.304 further states that, regarding "stored information cell selection", the user equipment may optimize public land mobile network search by using stored information e.g. frequencies and optionally also information on cell parameters from previously received measurement control information elements.

According to the present invention, it is proposed that the user equipment is provided with information such that the number of radio cell measurements is able (all other conditions being equal) to be reduced, especially by means of steering cell measurement and/or cell selection of a user equipment, when the user equipment is in a mobile communication network (or connected to or camping on the mobile communication network). The mobile communication network typically comprises or uses or is associated or assigned to a core network as well as a radio access network, the radio access network comprising a plurality of radio cells and a plurality of base station entities (typically gNodeBs (in case of using 5G radio access technology) or eNodeBs (in case of using LTE access technology) or base station entities according to other radio access technologies, such as 6G, etc.) providing these radio cells. Such a base station entity (e.g. "gNB" or "gNodeB", or "base station" in 5G) may typically serve several radio cells (e.g. sectors or beams); hence, in such a case, if the base station entity is to move, all related radio cells move as well. Furthermore, the term "radio cell" is to be understood in a general sense according to the present invention such as to also include the case of a user equipment that serves as a relay for one other user equipment or a plurality of other user equipments (e.g. by means of providing coverage extension).

According to the present invention, the mobile communication network comprises or is assigned to a radio coverage prediction function, RCPF, enabled to provide information regarding which one of the radio cells is likely to be available to the user equipment while (or in case) the user equipment is located, at a specific point in time (or during a specific time period), at a specific position (or in a specific area). In the most basic form, it is required, according to the present invention, that the user equipment receives, from the radio coverage prediction function, a radio coverage prediction information, wherein the radio coverage prediction information comprises at least one location information, at least one time information, and at least one cell information, wherein the at least one cell information indicates, relating to a specific radio cell out of the plurality of radio cells, at least a frequency information of the specific radio cell.

The radio coverage prediction information is intended to steer a user equipment to preferentially perform cell measurements regarding those radio cells or those frequencies indicated by the radio coverage prediction information; of course, which radio cell (or plurality of radio cells) or which frequency (or plurality of frequencies) are strongest or are likely to be strongest (and, hence, to prioritize by the user equipment) depends on the location for which this information is provided (as different base station entities are located at different geographical positions).

Furthermore according to the present invention, subsequently to receiving (or having received) the radio coverage prediction information, its content is used, by the user equipment, to determine a suitable radio cell, out of the plurality of radio cells, for which the measured cell attributes satisfy the cell selection criteria. This means that according to the present invention, the user equipment receives - by means of the radio coverage prediction information - guidance as to where (i.e. especially at which frequency or frequencies) it might be beneficial to search for suitable radio cells. Thereby, it is advantageously possible for the user equipment to get guidance as to where (especially frequency-wise) to start searching for a suitable radio cell, and, at least in some or many cases or situations, is thus enabled to avoid to perform some unsuccessful measurements; hence, the number of radio cells measurements and/or frequency measurements is able to be reduced and power consumption of the user equipment saved.
Hence, the radio coverage prediction information transmitted to the user equipment is intended to convey an information to the user equipment according to the principle: "in case it is detected by the user equipment (or the user equipment has evidence to assume) that it (the user equipment) is located at or near a location indicated by the (or one piece of) location information (as part of the radio coverage prediction information), then the user equipment prioritizes cell selection measurements regarding such radio cells (or such frequencies associated with respective radio cells; i.e. the user equipment is steered, measurement-wise, to those radio cells or frequencies) that are indicated by the cell information part (of the radio coverage prediction information) linked or associated to the considered location information".
When a base station entity is not stationary but moving, its respective indication as part of the cell information (of the radio coverage prediction information) associated with a location information (of the radio coverage prediction information) would only be valid as long as the considered base station entity would be located, (more or less) at or near the geographical position indicated by the location indication. In order to apply the principle of the present invention the radio coverage prediction information also comprises - besides the at least one location information and the at least one cell information (related to the location information) - at least one time information. The time information is likewise related to the respective location information and cell information and provides a kind of validity time information to the respective cell information (related to the considered non-stationary base station entity) regarding the location information. Hence the radio coverage prediction information transmitted to the user equipment is intended to convey an information to the user equipment according to the principle: "in case it is detected by the user equipment (or the user equipment has evidence to assume) that it (the user equipment) is located at or near a location indicated by the (or one piece of) location information (as part of the radio coverage prediction information), then the user equipment prioritizes cell selection measurements regarding such radio cells that are indicated by the cell information part (of the radio coverage prediction information) linked or associated to the considered location information, provided that the current time corresponds to (or is covered or is not too different from) what is indicated by the time information (of the radio coverage prediction information)". According to the present invention, it is possible that the radio coverage prediction information comprises pieces of time information only regarding such base station entities that are non-stationary, while regarding stationary base station entities, the cell information of the radio coverage prediction information is not linked or related to a corresponding time information.

Generally in the context of the present invention, the term "location information" (as part of the radio coverage prediction information) is to be understood to relate or to refer to a position or a location or a geographical area (for which the related cell information (as part of the radio coverage prediction information) is applicable or valid). Likewise, the term "time information" (as part of the radio coverage prediction information) is to be understood to relate to a point in time or a time interval or time period (for which the related cell information (as part of the radio coverage prediction information) is applicable or valid regarding the location information being related to both the cell information and the time information).

According to the present invention, it is advantageously possible and preferred that in case that the user equipment is unable to determine a suitable radio cell out of the plurality of radio cells based on the content - especially the at least one cell information, comprising at least a frequency information or comprising a frequency information and an information necessary to address the radio cell- of the radio coverage prediction information, the user equipment performs measurements in view of cell selection applying an initial cell selection approach by means of scanning the available radio frequency channels, especially all the radio frequency channels in the frequency bands allowed and/or accessible and/or available to the user equipment.

It is thereby advantageously possible that the user equipment - even without using the content of the radio coverage prediction information - is able to find a suitable or at least an acceptable radio cell.

According to the present invention, it is advantageously furthermore possible and preferred that the user equipment receives the radio coverage prediction information in response to a preceding radio coverage prediction request, by the user equipment, wherein by means of the radio coverage prediction request the user equipment requests the radio coverage prediction function to provide radio coverage prediction information, especially regarding
-- one further specific position or one further specific area of the user equipment,
-- or, alternatively, regarding one further specific position or one further specific area of the user equipment and at one further specific point in time or during a further specific time period.

It is thereby advantageously possible according to the present invention that the user equipment is able to trigger the transmission of the radio coverage prediction information by means or the radio coverage prediction request.

According to the present invention, it is furthermore advantageously possible and preferred that the radio coverage prediction information comprises at least a first radio coverage prediction information element comprising a first location information, a first time information, and a first cell information,
the first cell information relating to at least a first radio cell out of the plurality of radio cells, wherein a radio cell or radio cells referred to by the first cell information is or are used, by the user equipment, as a cell selection candidate or cell selection candidates to determine whether the first radio cell is a suitable radio cell, especially in case that the specific position or the specific area of the user equipment corresponds to or at least approximately corresponds to the position or area referred to by the first location information, and the specific point in time or the specific time period of the user equipment corresponds to or at least approximately corresponds to the time or time period referred to by the first time information, and/or
wherein the radio coverage prediction information comprises a second radio coverage prediction information element comprising a second location information, a second time information, and a second cell information,
the second cell information relating to at least a second radio cell out of the plurality of radio cells, wherein a radio cell or radio cells referred to by the second cell information is or are used, by the user equipment, as a cell selection candidate or cell selection candidates to determine whether the second radio cell is a suitable radio cell in case that the specific position or the specific area of the user equipment corresponds to or at least approximately corresponds to the position or area referred to by the second location information, and the specific point in time or the specific time period of the user equipment corresponds to or at least approximately corresponds to the time or time period referred to by the second time information.

By means of organizing the radio coverage prediction information by means of radio coverage prediction information elements, it is advantageously possible to transmit radio coverage prediction information for a multitude of different locations and/or for a multitude of different combinations of locations and time intervals. It is to be understood that for each instance of a location information and a cell information, these pieces of information form a combination or are combined, and, likewise, it is to be understood that for each instance of a location information, a time information, and a cell information, these pieces of information form a combination or are combined. Of course, especially in case that the path of movement of a specific base station entity (and its associated radio cells) is known or predictable by the mobile communication network, that regarding the respective cell information or plurality of pieces of cell information, not only one location information and one time information (relating to the position of the considered base station entity at a considered point in time) is given or provided by the radio coverage prediction information but that the radio coverage prediction information (especially by means of the radio coverage prediction information element) - by means of indicating or conveying information about (at least the current portion of) the path of movement of the base station entity - provides information about more than one location of that base station entity at more than one point in time.

Furthermore, since at least the specific base station entity of the plurality of base station entities is - as well as the one or the plurality of radio cells associated with or provided by the specific base station entity -, at least temporarily, moving from a first position at a considered first point in time to a second position at a considered second point in time, it is advantageously possible and preferred that the one or the plurality of radio cells associated with or provided by the specific base station entity, or part thereof, are referred to by the first cell information in case that the first position and the considered first point in time correspond to or at least approximately correspond to the position or area referred to by the first location information and the time or time period referred to by the first time information, and wherein especially the one or the plurality of radio cells associated with or provided by the specific base station entity, or part thereof, are referred to by the second cell information in case that the second position and the considered second point in time correspond to or at least approximately correspond to the position or area referred to by the second location information and the time or time period referred to by the second time information.

Thereby, the inventive method is able to be applied to base station entities that are moving.

Furthermore, it is advantageously possible and preferred according to the present invention that the radio coverage prediction information and/or the first and second radio coverage prediction information elements are generated taking into account at least part of the following:
-- the distance between the respective base station entity to the position or location referred to by the first and/or second position or location information,
-- the respective radio propagation loss,
-- the radiated power of the respective base station entity for a respective radio cell,
-- the antenna gain, antenna configuration and/or antenna orientation of the respective base station entity,
-- the path and/or route of the respective base station entity and/or user equipment known to the coverage prediction function.

Thereby, it is advantageously possible that the radio coverage prediction information comprises relevant information for the user equipment to more easily and more quickly find a suitable radio cell.

According to a further preferred embodiment of the present invention, the radio coverage prediction information and/or the first and second radio coverage prediction information elements are transmitted using either one of the following:
-- by specifically transmitting to the user equipment,
-- by broadcasting to the user equipment and to unspecified further user equipments, or
-- by multicasting to the user equipment and to a specific group of further user equipments.

Thereby, it is advantageously possible that the transmission of the radio coverage prediction information is able to be realized in a flexible manner.

According to a further preferred embodiment of the present invention, upon generating the radio coverage prediction information and/or the first and second radio coverage prediction information elements, the coverage prediction function considers a network slice of the mobile communication network or a combination of network slices of the mobile communication network, wherein especially the network slice or network slices to be considered are based on configured values or based on the identity of the user equipment or wherein the radio coverage prediction request comprises an indication or reference to the network slice or network slices to be considered.

It is thereby advantageously possible to apply the transmission and the content of the radio coverage prediction information also to the case of different network slices being used within the mobile communication network.

According to a further preferred embodiment of the present invention, the radio coverage prediction function is implemented as part of one base station entity or as part of a plurality of base station entities, and/or wherein the radio coverage prediction function uses only a partial knowledge, especially information of only a given base station entity and its immediate neighbors, especially neighbors belonging to a specific tracking area.

Furthermore, the present invention relates to a user equipment according to claim 10.

Furthermore, the present invention relates to a mobile communication network according to claim 11.

Still additionally, the present invention relates to a radio coverage prediction function of a mobile communication network.

Additionally, the present invention relates to a program comprising a computer readable program code which, when executed on a user equipment causes the user equipment to perform the inventive method.

Still additionally, the present invention relates to a computer-readable medium comprising instructions which when executed on a user equipment causes the user equimnet to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the path of a moving user equipment with respect to a plurality of base station entities of a mobile communication network.
Figure 2 schematically illustrates the path of a moving user equipment and a plurality of paths of a plurality of base station entities of a mobile communication network.
Figure 3 schematically illustrates the transmission of a radio coverage prediction information from a radio coverage prediction function to a user equipment.
Figure 4 schematically illustrates a communication diagram between a user equipment, a base station entity, and a radio coverage prediction function.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

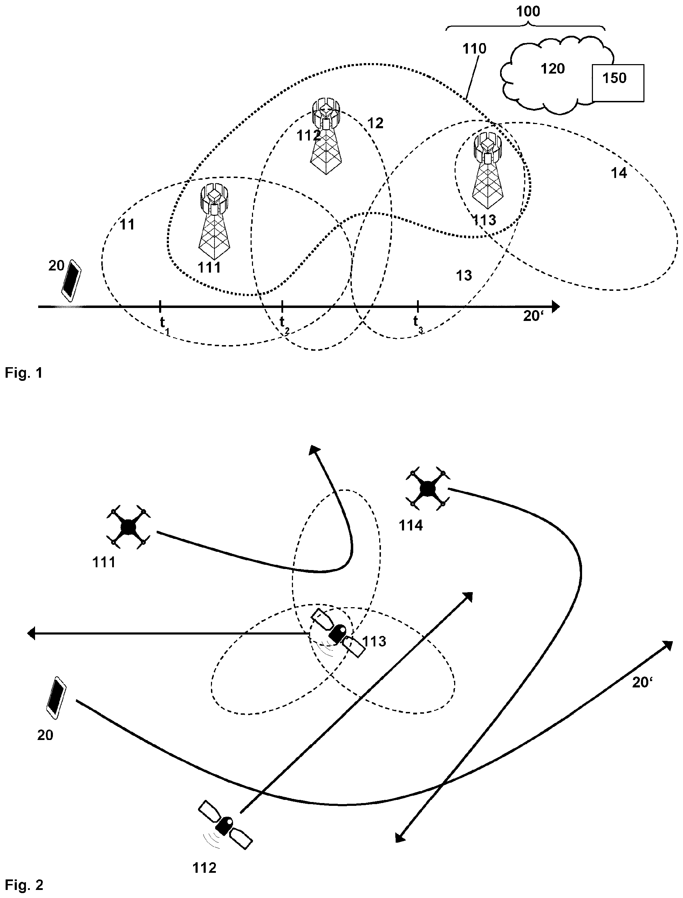

In Figure 1, a user equipment 20 is schematically shown, the user equipment 20 moving along a path (schematically indicated, in Figure 1, by means of a straight arrow 20') with respect to a plurality of base station entities 111, 112, 113 of an access network 110 of a mobile communication network 100, the mobile communication network 100 typically also comprising or being assigned to or being able to access a core network 120.

The client communication device 20 is connected to the access network 110 of the mobile communication network 100 by means of successively being connected to different radio cells along the path of the user equipment 20. In the exemplary situation or scenario shown in Figure 1, a first base station entity 111 generates or is associated with or spans a first radio cell 11, a second base station entity 112 generates or is associated with or spans a second radio cell 12, and a third base station entity 113 generates or is associated with or spans a third radio cell 13 as well as a fourth radio cell 14; this is just to schematically illustrate that, typically, one and the same base station entity 111, 112, 113 normally generates or is associated with or spans more than one radio cell, often in different directions, i.e. a radio cell might be generated in (or along) primarily a first direction (and covering a first sector, i.e. a range of directions around that first direction) starting from the location of a considered base station entity, and a further radio cell might be generated in (or along) primarily a second direction (and covering a second sector, i.e. a range of directions around that second direction), likewise starting from the location of a considered base station entity, and the first and second direction differing by, e.g., 120° (2π/3 rad); this is schematically shown, in Figure 1, for the third base station entity 113, generating or spanning the third and fourth radio cells 13, 14 in different directions.

Typically, the user equipment 20 performs measurements regarding its current radio environment, i.e. while the user equipment 20 being located at a specific position at a specific point in time, it performs measurements regarding which radio cell might be a possible or suitable radio cell (primarily of the mobile communication network 100 but, if need be also of a further mobile communication network; such a further mobile communication network not being explicitly shown in Figure 1) to connect with or to camp on. For example, this is also the case in a typical handover scenario: The user equipment 20 performs cell measurements regarding radio cells, and can, especially as per the signal strength values (of (especially broadcast) radio signals these radio cells are emitting, or, rather, the base station entities (generating or spanning these radio cells) are emitting) observed, select a specific radio cell available at the considered specific point in time and at the considered specific position of the user equipment 20.

In the example shown in Figure 1, the user equipment 20 starts at a first point in time (indicated by means of t₁ in Figure 1 and at a first position) on (i.e. camping on or being connected with) the first radio cell 11. At a second point in time (indicated by means of t₂ in Figure 1 and at a second position), the user equipment 20 performs a measurement (of its current radio environment at the current position of the user equipment 20) and, based on the measured signal strength (or, rather, different strength values (measured) of radio signals detected or received, typically being generated by different radio cells or base station entities), decides to continue attached to the second radio cell 12. At a third point in time (indicated by means of t₃ in Figure 1 and at a third position), the measurement procedure (of the current radio environment at the current position) of the user equipment 20 is repeated and, based on the measured signal strength (or, rather, different strength values (measured) of radio signals detected or received at that subsequent point in time and at that different position of the user equipment 20), the user equipment 20 decides to select the third radio cell 13.

Which radio cell (or, rather, plurality of radio cells) is/are (currently) visible (to the user equipment 20 at its respective specific position and at the respective specific point in time), and which radio cell is a suitable one (or, the most suitable one; in case no 'suitable (radio) cell' is detected by the user equipment 20 at a considered specific point in time (i.e. at a considered specific position, or vice versa), an 'acceptable (radio) cell' might be selected) typically changes over time (especially while the user equipment 20 is moving along its path 20' (as at least some radio cells will be positioned statically), but in case of moving radio cells (e.g. provided by drones or satellites) also in case that the position of the user equipment 20 is constant) due to the mobility and the changing nature of the radio channel.

This is especially true in a complex radio situation. In Figure 2, the path 20' of a moving user equipment 20 and a plurality of paths of a plurality of base station entities 111, 112, 113, 114 of a mobile communication network 100 are schematically shown by means of arrows. For the third base station entity 113, a plurality of radio cells are schematically shown or indicated by means of dashed areas around the third base station entity 113, however without specifically indicating specific radio cells. In such a complex radio situation as shown in Figure 2, i.e. where both the user equipment 20 (and typically one or a plurality of other user equipments (not shown in Figure 2) besides the user equipment 20), and the base station entities 111, 112, 113, 114 are not static (or statically positioned, i.e. moving at least allowed to move) and, from the perspective of each other, have rather unpredictable paths, a signal strength measurement at a given point in time may not offer any guarantee as to the suitability of the choice of the respective radio cell at a subsequent point in time (and/or at another location, even in the vicinity) - hence, such (radio) cell selection measurements are likely to be required to be multiplied and repeated, a situation that is likely to increase the energy consumption (and further efforts, especially regarding conducting and the processing of such measurements) of the user equipment 20.

In order to help the user equipment 20 to perform the cell measurement (or, rather, plurality of cell measurements) in such cases, the method (and the inventive system, mobile communication network, user equipment, or radio coverage prediction function or server entity) according to the present invention describes how route information and time information can be used to steer the user equipment 20 in performing measurements directed to specific radio cells 11, 12, 13 or frequencies with a higher priority or simply in another sequence. Aided by this information, cell measurement can then be performed quicker and more energy efficiently by the user equipment 20.

According to the present invention, it is to be understood that the inventive method (and the inventive system, mobile communication network, user equipment, or radio coverage prediction function or server entity) primarily does not consider or advocate handover planning (by the mobile communication network 100 or components thereof) but instead provides the user equipment 20 with information to perform an enhanced method to optimize cell measurements. This is primarily because the complex nature of the radio channel (e.g. multipath propagation, Doppler, frequency-selective fading) typically puts the user equipment 20 in a better position to ultimately decide, based on its own measurements, what or which radio cell it should select (and which radio cell (or associated frequency) to measure with higher priority compared to other radio cells and/or frequencies).

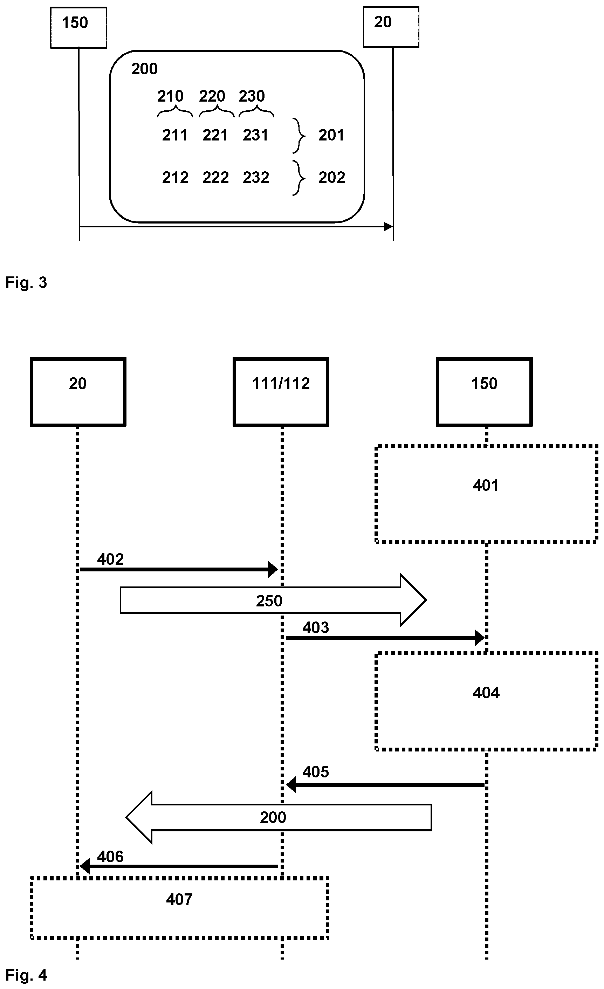

According to the present invention, the mobile communication network 100 comprises (e.g. as part of the core network 120 as schematically shown in Figure 1, or, alternatively as part of the access network 110, e.g. as part of each one or a sub-set of the base station entities 111, 112, 113) or is assigned to a radio coverage prediction function 150, RCPF, enabled to provide information regarding which one of the radio cells 11, 12, 13 is likely to be available to the user equipment 20 while the user equipment 20 being located, at a specific point in time or during a specific time period, at a specific position or in a specific area.
Hence, in a first step, the user equipment 20 receives, from the radio coverage prediction function 150, a radio coverage prediction information 200. This is schematically shown in Figure 3, showing a communication diagram between the radio coverage prediction function 150 and the user equipment 20. The radio coverage prediction information 200 is transmitted (indicated, in Figure 2, by means of an arrow pointing from the radio coverage prediction function 150 to the user equipment 20), by the radio coverage prediction function 150, to the user equipment 20, typically via or using one base station entity or a plurality of base station entities of the access network 110 of the mobile communication network 100. The radio coverage prediction information 200 is received by the user equipment 20 from the respective base station entity or entities. The radio coverage prediction information 200 comprises at least one location information 210, at least one time information 220, and at least one cell information 230. The at least one cell information 230 indicates, relating to a specific radio cell out of the plurality of radio cells 11, 12, 13, at least a frequency information of the specific radio cell 11, 12, 13. Other information necessary to address said cells, e.g. cell identity and/or cell access information may also be included in the cell information 230. In a second step according to the present invention, the content of the radio coverage prediction information 200 is used, by the user equipment 20, to determine a suitable radio cell, out of the plurality of radio cells 11, 12, 13, for which the measured cell attributes satisfy the cell selection criteria. Of course, in case that the user equipment 20 is unable to determine a suitable radio cell based on the content of the radio coverage prediction information 200, the user equipment 20 especially performs measurements in view of cell selection applying an initial cell selection approach, i.e. by means of scanning the available radio frequency channels, especially all the radio frequency channels in the frequency bands allowed and/or accessible and/or available to the user equipment 20.

According to a preferred embodiment of the present invention, the user equipment 20 receives the radio coverage prediction information 200 in response to a preceding radio coverage prediction request 250 that the user equipment 20 transmits to the radio coverage prediction function 150. By means of the radio coverage prediction request 250, the user equipment 20 requests the radio coverage prediction function 150 to provide the radio coverage prediction information, especially regarding one further specific position or one further specific area of the user equipment 20, and optionally also - besides one further specific position or one further specific area of the user equipment 20 - at one further specific point in time or during a further specific time period.

An example of such an embodiment is schematically shown in Figure **4****,** which shows a communication diagram between the user equipment 20, a base station entity 111/112, and the radio coverage prediction function 150. In a first processing step 401, at the radio coverage prediction function 150, the position and the time instants for which to predict recommended cells for cell measurements are known to the radio coverage prediction function 150 and/or to the mobile communication network 100. In a second processing step 402, the user equipment 20 sends a list comprising locations and time instants, typically to its base station entity to which it is connected (e.g. gNodeB) such as base station entities 111 or 112; in a third processing step 403, the respective base station entity 111, 112 sends or transmits the list to radio coverage prediction function 150. The list comprising locations and time instants corresponds to or realizes one embodiment of the radio coverage prediction request 250 and its transmission from the user equipment 20 to the radio coverage prediction function 150 is schematically illustrated, in Figure 4, by means of an arrow between the second and third processing step 402, 403. In a fourth processing step 404, the cell list is calculated based on, e.g., the paths of base station entities (gNB paths), radio propagation, radiated power, antenna gain, etc. In a fifth processing step 405 and a sixth processing step 406, the radio coverage prediction information 200 is sent, by the radio coverage prediction function 150 to the user equipment 20 which is schematically illustrated, in Figure 4, by means of an arrow between the fifth and sixth processing step 405, 406. For example, the radio coverage prediction information 200 corresponds to a list comprising cells, locations and time instants that the radio coverage prediction function 150 transmits to the respective base station entity 111, 112 (e.g. a gNB) in the fifth processing step 405, and that the respective base station entity 111, 112 sends to the user equipment 20 in the sixth processing step 406. In a seventh processing step 407, the user equipment 20 performs cell measurements on specified time/locations, prioritizing radio cells that are indicated by means of the radio coverage prediction information 200.

Hence, based on a set of positions and time instants that are either known (by the radio coverage prediction function 150), or received from the user equipment 20 (via a current base station entity, especially a gNB), the radio coverage prediction function 150 is able to calculate a cell list containing recommended cells to be measured at the locations and time instants. According to the present invention, the following parameters are especially considered in the fourth processing step 404, i.e. when calculating or generating the radio coverage prediction information 20 (or the cell list):
-- Distance,
-- Radio propagation loss,
-- Radiated power of each base station entity (gNB) for the given cell at said time instants,
-- base station entity (gNB) antenna gain and configuration (e.g. number of antenna elements),
-- Antenna orientation,
-- Known path/route of each base station entity (gNB).

According to the present invention, the transmission of the radio coverage prediction information 200 (e.g. the list) towards the user equipment 20 is able to be realized via unicast (i.e. the radio coverage prediction information 200 is directed to a specific user equipment 20, e.g. via a secure channel), or via broadcast (i.e. the radio coverage prediction information 200 is directed to any user equipment 20), or via multicast (i.e. the radio coverage prediction 200 is directed to any user equipment 20 pertaining to or being part of a specific group, this communication, e.g., being encrypted with a group key and as such not being accessible to all user equipments (not belonging to that group)).

Furthermore, it is advantageously possible to extending the inventive method to slices (or network slices, i.e. network segments within a 5G network). Not all radio cells might provide connectivity to all network slices. As such, when a user equipment 20 requests a cell list for performing cell measurements, the returned list (i.e. the radio coverage prediction information 200) may not contain cells serving the slice(s) required by the user equipment 20. Hence, according to the present invention, it is advantageously possible that a user equipment 20 requesting said cell list (i.e. the radio coverage prediction information 200) is also able to indicate the network slice or network slices it requires. The radio coverage prediction function 150 can then take this information into account when calculating the cell list (i.e. the radio coverage prediction information 200).

Hence, according to the present invention, a method is disclosed wherein the radio coverage prediction function, as part of the mobile communication network, is used by means of which based on a given position and time, the coverage prediction function is able to calculate an estimation of the radio cells with the best radio signal qualities. The calculation taking into account one or a plurality of the following: the distance, the radio propagation loss, the radiated power of each gNodeB for the given cell at said time instants, the gNB antenna gain and configuration (e.g. number of antenna elements), the antenna orientation, known path/route of each gNodeB.
A list comprising one or more of the estimated cells, position(s) and points in time those cells are recommended to be used for cell measurement is transmitted (by means of the radio coverage prediction information) to the user equipment 20 over the air in unicast (directed specifically to a specific user equipment), broadcast (can be used by any user equipment) or multicast (can be used by specific user equipments).
The user equipment performs cell measurements on the cells as indicated on the received data. The user equipment preferably requests cell measurement candidates to the mobile communication network for a series of tuples of time instants and positions and the coverage prediction function returns a list of recommended cells to be used for cell measurement. It is furthermore preferred that the radio coverage prediction function additionally considers a network slice or combination of network slices that need to be served when calculating the cell list. The network slice or network slices to be considered can be, e.g., based on configured values and/or based on the identity of the user equipment that requested the cell list (e.g. the allowed slices this UE is allowed to access) and/or based on a list requested network slice or network slices the user equipment includes in the initial request (radio coverage prediction request).
Especially, the radio coverage prediction function is able to be implemented as part of one or more gNodeBs (or as part of one or a plurality of base station entities) - i.e. a distributed deployment - or, alternatively in a more centralized deployment.
It is furthermore preferred that the radio coverage prediction function uses only a partial knowledge (e.g. information of only a given gNB and its immediate neighbors, e.g. gNBs belonging to a specific Tracking Area) to realize the list estimation, i.e. for generating the radio coverage prediction information.

## Claims

1. Method for steering cell measurement and/or cell selection of a user equipment (20) in or connected to or camping on a mobile communication network (100), wherein the mobile communication network (100) comprises or uses or is associated or assigned to a radio access network (110) comprising a plurality of radio cells (11, 12, 13) and a plurality of base station entities (111, 112) providing these radio cells (11, 12, 13), wherein at least a specific base station entity (111) of the plurality of base station entities (111, 112) is - as well as the one or the plurality of radio cells (11, 13) associated with or provided by the specific base station entity (111) -, at least temporarily, moving from a first position to a second position, **characterized in that** the mobile communication network (100) furthermore comprises or is assigned to a radio coverage prediction function (150), RCPF, enabled to provide information regarding which one of the radio cells (11, 12, 13) is likely to be available to the user equipment (20) while the user equipment (20) being located, at a specific point in time or during a specific time period, at a specific position or in a specific area,
the method comprising the following steps:
-- in a first step, the user equipment (20) receives, from the radio coverage prediction function (150), a radio coverage prediction information (200), the radio coverage prediction information (200) comprising at least one location information (210), at least one time information (220), and at least one cell information (230), the at least one cell information (230) indicating - relating to a specific radio cell associated with or provided by the specific base station entity (111) -, at least a frequency information of the specific radio cell, wherein the location information (210) relates or to refers to a position or a location or a geographical area for which the related cell information as part of the radio coverage prediction information is applicable or valid, wherein the time information (220) relates to a point in time or time period, for which the related cell information (230) as part of the radio coverage prediction information (200) is applicable or valid regarding the location information (210) being related to both the cell information (230) and the time information (220),
-- in a second step, the content of the radio coverage prediction information (200) is used, by the user equipment (20), to determine a suitable radio cell, out of the plurality of radio cells (11, 12, 13), for which the measured cell attributes satisfy the cell selection criteria.

2. Method according to claim 1, wherein in case that the user equipment (20) is unable to determine a suitable radio cell out of the plurality of radio cells (11, 12, 13) based on the content - especially the at least one cell information (230), comprising at least a frequency information or comprising a frequency information and an information necessary to address the radio cell - of the radio coverage prediction information (200), the user equipment (20) performs measurements in view of cell selection applying an initial cell selection approach by means of scanning the available radio frequency channels, especially all the radio frequency channels in the frequency bands allowed and/or accessible and/or available to the user equipment (20).

3. Method according to one of the preceding claims, wherein the user equipment (20) receives the radio coverage prediction information (200) in response to a preceding radio coverage prediction request (250), by the user equipment (20), wherein by means of the radio coverage prediction request the user equipment (20) requests the radio coverage prediction function (150) to provide radio coverage prediction information, especially regarding
-- one further specific position or one further specific area of the user equipment (20),
-- or, alternatively, regarding one further specific position or one further specific area of the user equipment (20) and at one further specific point in time or during a further specific time period.

4. Method according to one of the preceding claims, wherein the radio coverage prediction information (200) comprises at least a first radio coverage prediction information element (201) comprising a first location information (211), a first time information (221), and a first cell information (231),
the first cell information (231) relating to at least a first radio cell (11) out of the plurality of radio cells (11, 12, 13), wherein a radio cell or radio cells referred to by the first cell information (231) is or are used, by the user equipment (20), as a cell selection candidate or cell selection candidates to determine whether the first radio cell (11) is a suitable radio cell, especially in case that the specific position or the specific area of the user equipment (20) corresponds to or at least approximately corresponds to the position or area referred to by the first location information (211), and the specific point in time or the specific time period of the user equipment (20) corresponds to or at least approximately corresponds to the time or time period referred to by the first time information (221), and/or wherein the radio coverage prediction information (200) comprises a second radio coverage prediction information element (202) comprising a second location information (212), a second time information (222), and a second cell information (232),
the second cell information (232) relating to at least a second radio cell (12) out of the plurality of radio cells (11, 12, 13), wherein a radio cell or radio cells referred to by the second cell information (232) is or are used, by the user equipment (20), as a cell selection candidate or cell selection candidates to determine whether the second radio cell (12) is a suitable radio cell in case that the specific position or the specific area of the user equipment (20) corresponds to or at least approximately corresponds to the position or area referred to by the second location information (212), and the specific point in time or the specific time period of the user equipment (20) corresponds to or at least approximately corresponds to the time or time period referred to by the second time information (222).

5. Method according to claim **4,** wherein the specific base station entity (111) is moving from the first position at a considered first point in time to the second position at a considered second point in time, wherein the one or the plurality of radio cells (11, 13) associated with or provided by the specific base station entity (111), or part thereof, are referred to by the first cell information (231) in case that the first position and the considered first point in time correspond to or at least approximately correspond to the position or area referred to by the first location information (211) and the time or time period referred to by the first time information (221), and wherein especially the one or the plurality of radio cells (11, 13) associated with or provided by the specific base station entity (111), or part thereof, are referred to by the second cell information (232) in case that the second position and the considered second point in time correspond to or at least approximately correspond to the position or area referred to by the second location information (212) and the time or time period referred to by the second time information (222).

6. Method according to claim 4 or 5, wherein the radio coverage prediction information (200) and/or the first and second radio coverage prediction information elements (201, 202) are generated taking into account at least part of the following:
-- the distance between the respective base station entity to the position or location referred to by the first and/or second position or location information (211, 212),
-- the respective radio propagation loss,
-- the radiated power of the respective base station entity for a respective radio cell,
-- the antenna gain, antenna configuration and/or antenna orientation of the respective base station entity,
-- the path and/or route of the respective base station entity and/or user equipment known to the coverage prediction function (150).

7. Method according to one of claims 4 to 6, wherein the radio coverage prediction information (200) and/or the first and second radio coverage prediction information elements (201, 202) are transmitted using either one of the following:
-- by specifically transmitting to the user equipment (20),
-- by broadcasting to the user equipment (20) and to unspecified further user equipments, or
-- by multicasting to the user equipment (20) and to a specific group of further user equipments.

8. Method according to one of claims 4 to 7, wherein, upon generating the radio coverage prediction information (200) and/or the first and second radio coverage prediction information elements (201, 202), the coverage prediction function (150) considers a network slice of the mobile communication network (100) or a combination of network slices of the mobile communication network (100), wherein especially the network slice or network slices to be considered are based on configured values or based on the identity of the user equipment (20) or wherein the radio coverage prediction request (250) comprises an indication or reference to the network slice or network slices to be considered.

9. Method according to one of the preceding claims, wherein the radio coverage prediction function (150) is implemented as part of one base station entity or as part of a plurality of base station entities, and/or wherein the radio coverage prediction function (150) uses only a partial knowledge, especially information of only a given base station entity and its immediate neighbors, especially neighbors belonging to a specific tracking area.

10. User equipment (20) for steering cell measurement and/or cell selection, the user equipment (20) being in or connected to or camping on a mobile communication network (100), comprising or using or being associated or assigned to a radio access network (110) comprising a plurality of radio cells (11, 12, 13) and a plurality of base station entities (111, 112) providing these radio cells (11, 12, 13), wherein at least a specific base station entity (111) of the plurality of base station entities (111, 112) is - as well as the one or the plurality of radio cells (11, 13) associated with or provided by the specific base station entity (111) -, at least temporarily, moving from a first position to a second position, **characterized in that** the user equipment (20) is able to communicate with a radio coverage prediction function (150), RCPF, enabled to provide information regarding which one of the radio cells (11, 12, 13) is likely to be available to the user equipment (20) while the user equipment (20) being located, at a specific point in time or during a specific time period, at a specific position or in a specific area,
wherein the user equipment (20) is configured such that:
-- the user equipment (20) receives, from the radio coverage prediction function (150), a radio coverage prediction information (200), the radio coverage prediction information (200) comprising at least one location information (210), at least one time information (220), and at least one cell information (230),
the at least one cell information (230) indicating - relating to a specific radio cell associated with or provided by the specific base station entity (111) -, at least a frequency information of the specific radio cell, wherein the location information (210) relates or to refers to a position or a location or a geographical area for which the related cell information as part of the radio coverage prediction information is applicable or valid, wherein the time information (220) relates to a point in time or time period, for which the related cell information (230) as part of the radio coverage prediction information (200) is applicable or valid regarding the location information (210) being related to both the cell information (230) and the time information (220),
-- the content of the radio coverage prediction information (200) is used, by the user equipment (20), to determine a suitable radio cell, out of the plurality of radio cells (11, 12, 13), for which the measured cell attributes satisfy the cell selection criteria.

11. Mobile communication network (100) for realizing cell measurement and/or cell selection of a user equipment (20) in or connected to or camping on the mobile communication network (100), wherein the mobile communication network (100) comprises or uses a radio access network (110) comprising a plurality of radio cells (11, 12, 13) and a plurality of base station entities (111, 112) providing these radio cells (11, 12, 13), wherein at least a specific base station entity (111) of the plurality of base station entities (111, 112) is - as well as the one or the plurality of radio cells (11, 13) associated with or provided by the specific base station entity (111) -, at least temporarily, moving from a first position to a second position, wherein the mobile communication network (100) comprises the user equipment (20), **characterized in that** the mobile communication network (100) furthermore comprises a radio coverage prediction function (150), RCPF, enabled to provide information regarding which one of the radio cells (11, 12, 13) is likely to be available to the user equipment (20) while the user equipment (20) being located, at a specific point in time or during a specific time period, at a specific position or in a specific area,
wherein the mobile communication network (100) is configured such that:
-- a radio coverage prediction information (200) is transmitted, from the radio coverage prediction function (150), to the user equipment (20) of the mobile communication network (100), the radio coverage prediction information (200) comprising at least one location information (210), at least one time information (220), and at least one cell information (230), the at least one cell information (230) indicating - relating to a specific radio cell associated with or provided by the specific base station entity (111) -, at least a frequency information of the specific radio cell, wherein the location information (210) relates or to refers to a position or a location or a geographical area for which the related cell information as part of the radio coverage prediction information is applicable or valid, wherein the time information (220) relates to a point in time or time period, for which the related cell information (230) as part of the radio coverage prediction information (200) is applicable or valid regarding the location information (210) being related to both the cell information (230) and the time information (220),
-- the content of the radio coverage prediction information (200) is used, by the user equipment (20), to determine a suitable radio cell, out of the plurality of radio cells (11, 12, 13), for which the measured cell attributes satisfy the cell selection criteria.

12. Radio coverage prediction function (150) of a mobile communication network (100), the mobile communication network (100) comprises or uses a radio access network (110) comprising a plurality of radio cells (11, 12, 13) and a plurality of base station entities (111, 112) providing these radio cells (11, 12, 13), wherein at least a specific base station entity (111) of the plurality of base station entities (111, 112) is - as well as the one or the plurality of radio cells (11, 13) associated with or provided by the specific base station entity (111) -, at least temporarily, moving from a first position to a second position, and the radio coverage prediction function (150), RCPF, being enabled to provide information regarding which one of the radio cells (11, 12, 13) is likely to be available to the user equipment (20) while the user equipment (20) being located, at a specific point in time or during a specific time period, at a specific position or in a specific area, the radio coverage prediction function (150) being configured to transmit, to the user equipment (20), a radio coverage prediction information (200), the radio coverage prediction information (200) comprising at least one location information (210), at least one time information (220), and at least one cell information (230), the at least one cell information (230) indicating - relating to a specific radio cell associated with or provided by the specific base station entity (111) -, at least a frequency information of the specific radio cell, wherein the location information (210) relates or to refers to a position or a location or a geographical area for which the related cell information as part of the radio coverage prediction information is applicable or valid, wherein the time information (220) relates to a point in time or time period, for which the related cell information (230) as part of the radio coverage prediction information (200) is applicable or valid regarding the location information (210) being related to both the cell information (230) and the time information (220).

13. Program comprising a computer readable program code, which, when executed in part on a user equipment (20), causes the user equipment (20) to perform a method according one of claims 1 to 5.

14. Computer-readable medium comprising instructions which when executed on a user equipment (20), causes the user equipment (20) to perform a method according one of claims 1 to 5.

## Patentansprüche

1. Verfahren zum Steuern einer Zellmessung und/oder einer Zellauswahl eines Benutzergeräts (20), das sich in einem Mobilfunknetz (100) befindet, mit diesem verbunden ist oder dort eingebucht ist, wobei das Mobilfunknetz (100) ein Funkzugangsnetz (110) umfasst oder verwendet oder diesem zugehörig oder zugeordnet ist, das eine Vielzahl von Funkzellen (11, 12, 13) und eine Vielzahl von Basisstationsentitäten (111, 112) umfasst, die diese Funkzellen (11, 12, 13) bereitstellen, wobei sich zumindest eine bestimmte Basisstationsentität (111) der Vielzahl von Basisstationsentitäten (111, 112) - ebenso wie die eine oder die Vielzahl von Funkzellen (11, 13), die der bestimmten Basisstationsentität (111) zugeordnet sind oder von dieser bereitgestellt werden - zumindest zeitweise von einer ersten Position zu einer zweiten Position bewegt, **dadurch gekennzeichnet, dass** das Mobilfunknetz (100) ferner eine Funkabdeckungsvorhersagefunktion (150), RCPF, umfasst oder dieser zugeordnet ist, die dazu ausgelegt ist, Informationen darüber bereitzustellen, welche der Funkzellen (11, 12, 13) dem Benutzergerät (20) voraussichtlich zur Verfügung steht, während sich das Benutzergerät (20) zu einem bestimmten Zeitpunkt oder während eines bestimmten Zeitraums an einer bestimmten Position oder in einem bestimmten Bereich befindet,
wobei das Verfahren die folgenden Schritte umfasst:
-- in einem ersten Schritt empfängt das Benutzergerät (20) von der Funkabdeckungsvorhersagefunktion (150) eine Funkabdeckungsvorhersageinformation (200), wobei die Funkabdeckungsvorhersageinformation (200) mindestens eine Standortinformation (210), mindestens eine Zeitinformation (220) und mindestens eine Zellinformation (230) umfasst,
wobei die mindestens eine Zellinformation (230) - bezogen auf eine bestimmte Funkzelle, die der bestimmten Basisstationsentität (111) zugeordnet ist oder von dieser bereitgestellt wird - zumindest eine Frequenzinformation der bestimmten Funkzelle angibt, wobei sich die Standortinformation (210) auf eine Position oder einen Standort oder einen geografischen Bereich bezieht oder verweist, für den die zugehörige Zellinformation als Teil der Funkabdeckungsvorhersageinformation anwendbar oder gültig ist, wobei sich die Zeitinformation (220) auf einen Zeitpunkt oder Zeitraum bezieht, für den die zugehörige Zellinformation (230) als Teil der Funkabdeckungsvorhersageinformation (200) hinsichtlich der Standortinformation (210), die sowohl auf die Zellinformation (230) als auch auf die Zeitinformation (220) bezogen ist, anwendbar oder gültig ist,
-- in einem zweiten Schritt wird der Inhalt der Funkabdeckungsvorhersageinformation (200) vom Benutzergerät (20) verwendet, um aus der Vielzahl von Funkzellen (11, 12, 13) eine geeignete Funkzelle zu bestimmen, für die die gemessenen Zellattribute die Zellauswahlkriterien erfüllen.

2. Verfahren nach Anspruch 1, wobei für den Fall, dass das Benutzergerät (20) nicht in der Lage ist, auf Grundlage des Inhalts der Funkabdeckungsvorhersageinformation (200) - insbesondere der mindestens einen Zellinformation (230), die zumindest eine Frequenzinformation oder eine Frequenzinformation und eine zum Adressieren der Funkzelle notwendige Information umfasst - eine geeignete Funkzelle aus der Vielzahl von Funkzellen (11, 12, 13) zu bestimmen, das Benutzergerät (20) im Hinblick auf die Zellauswahl Messungen durchführt, wobei ein anfänglicher Zellauswahlansatz mittels Abtastens der verfügbaren Funkfrequenzkanäle angewendet wird, insbesondere aller Funkfrequenzkanäle in den für das Benutzergerät (20) zulässigen und/oder zugänglichen und/oder verfügbaren Frequenzbändern.

3. Verfahren nach einem der vorhergehenden Ansprüche, wobei das Benutzergerät (20) die Funkabdeckungsvorhersageinformation (200) als Antwort auf eine vorhergehende Funkabdeckungsvorhersageanfrage (250) durch das Benutzergerät (20) empfängt, wobei das Benutzergerät (20) mittels der Funkabdeckungsvorhersageanfrage die Funkabdeckungsvorhersagefunktion (150) auffordert, Funkabdeckungsvorhersageinformation bereitzustellen, insbesondere hinsichtlich
-- einer weiteren bestimmten Position oder eines weiteren bestimmten Bereichs des Benutzergeräts (20),
-- oder alternativ hinsichtlich einer weiteren bestimmten Position oder eines weiteren bestimmten Bereichs des Benutzergeräts (20) und zu einem weiteren bestimmten Zeitpunkt oder während eines weiteren bestimmten Zeitraums.

4. Verfahren nach einem der vorhergehenden Ansprüche, wobei die Funkabdeckungsvorhersageinformation (200) mindestens ein erstes Funkabdeckungsvorhersageinformationselement (201) umfasst, das eine erste Standortinformation (211), eine erste Zeitinformation (221) und eine erste Zellinformation (231) umfasst,
wobei sich die erste Zellinformation (231) auf mindestens eine erste Funkzelle (11) aus der Vielzahl von Funkzellen (11, 12, 13) bezieht, wobei eine Funkzelle oder Funkzellen, auf die die erste Zellinformation (231) verweist, vom Benutzergerät (20) als Zellauswahlkandidat oder Zellauswahlkandidaten verwendet wird bzw. werden, um zu bestimmen, ob die erste Funkzelle (11) eine geeignete Funkzelle ist, insbesondere für den Fall, dass die bestimmte Position oder der bestimmte Bereich des Benutzergeräts (20) der Position oder dem Bereich, auf die bzw. den die erste Standortinformation (211) verweist, entspricht oder zumindest näherungsweise entspricht und der bestimmte Zeitpunkt oder der bestimmte Zeitraum des Benutzergeräts (20) dem Zeitpunkt oder Zeitraum, auf den die erste Zeitinformation (221) verweist, entspricht oder zumindest näherungsweise entspricht, und/oder
wobei die Funkabdeckungsvorhersageinformation (200) ein zweites Funkabdeckungsvorhersageinformationselement (202) umfasst, das eine zweite Standortinformation (212), eine zweite Zeitinformation (222) und eine zweite Zellinformation (232) umfasst,
wobei sich die zweite Zellinformation (232) auf mindestens eine zweite Funkzelle (12) aus der Vielzahl von Funkzellen (11, 12, 13) bezieht, wobei eine Funkzelle oder Funkzellen, auf die die zweite Zellinformation (232) verweist, vom Benutzergerät (20) als Zellauswahlkandidat oder Zellauswahlkandidaten verwendet wird bzw. werden, um zu bestimmen, ob die zweite Funkzelle (12) eine geeignete Funkzelle ist, für den Fall, dass die bestimmte Position oder der bestimmte Bereich des Benutzergeräts (20) der Position oder dem Bereich, auf die bzw. den die zweite Standortinformation (212) verweist, entspricht oder zumindest näherungsweise entspricht und der bestimmte Zeitpunkt oder der bestimmte Zeitraum des Benutzergeräts (20) dem Zeitpunkt oder Zeitraum, auf den die zweite Zeitinformation (222) verweist, entspricht oder zumindest näherungsweise entspricht.

5. Verfahren nach Anspruch 4, wobei sich die bestimmte Basisstationsentität (111) von der ersten Position zu einem betrachteten ersten Zeitpunkt zu der zweiten Position zu einem betrachteten zweiten Zeitpunkt bewegt, wobei die eine oder die Vielzahl von Funkzellen (11, 13), die der bestimmten Basisstationsentität (111) zugeordnet sind oder von dieser bereitgestellt werden, oder ein Teil davon durch die erste Zellinformation (231) bezeichnet werden, falls die erste Position und der betrachtete erste Zeitpunkt der Position oder dem Bereich, auf die bzw. den die erste Standortinformation (211) verweist, sowie dem Zeitpunkt oder Zeitraum, auf den die erste Zeitinformation (221) verweist, entsprechen oder zumindest näherungsweise entsprechen, und wobei insbesondere die eine oder die Vielzahl von Funkzellen (11, 13), die der bestimmten Basisstationsentität (111) zugeordnet sind oder von dieser bereitgestellt werden, oder ein Teil davon durch die zweite Zellinformation (232) bezeichnet werden, falls die zweite Position und der betrachtete zweite Zeitpunkt der Position oder dem Bereich, auf die bzw. den die zweite Standortinformation (212) verweist, sowie dem Zeitpunkt oder Zeitraum, auf den die zweite Zeitinformation (222) verweist, entsprechen oder zumindest näherungsweise entsprechen.

6. Verfahren nach Anspruch 4 oder 5, wobei die Funkabdeckungsvorhersageinformation (200) und/oder das erste und das zweite Funkabdeckungsvorhersageinformationselement (201, 202) unter Berücksichtigung zumindest eines Teils des Folgenden erzeugt werden:
-- des Abstands der jeweiligen Basisstationsentität zu der Position oder dem Standort, auf die bzw. den die erste und/oder zweite Positions- oder Standortinformation (211, 212) verweist,
-- des jeweiligen Funkausbreitungsverlusts,
-- der Strahlungsleistung der jeweiligen Basisstationsentität für eine jeweilige Funkzelle,
-- des Antennengewinns, der Antennenkonfiguration und/oder der Antennenausrichtung der jeweiligen Basisstationsentität,
-- des Pfads und/oder der Route der jeweiligen Basisstationsentität und/oder des Benutzergeräts, die der Abdeckungsvorhersagefunktion (150) bekannt sind.

7. Verfahren nach einem der Ansprüche 4 bis 6, wobei die Funkabdeckungsvorhersageinformation (200) und/oder das erste und das zweite Funkabdeckungsvorhersageinformationselement (201, 202) unter Verwendung einer der folgenden Möglichkeiten übertragen werden:
-- durch gezieltes Übertragen an das Benutzergerät (20),
-- durch Broadcasting an das Benutzergerät (20) und an nicht spezifizierte weitere Benutzergeräte, oder
-- durch Multicasting an das Benutzergerät (20) und an eine bestimmte Gruppe weiterer Benutzergeräte.

8. Verfahren nach einem der Ansprüche 4 bis 7, wobei die Abdeckungsvorhersagefunktion (150) beim Erzeugen der Funkabdeckungsvorhersageinformation (200) und/oder des ersten und des zweiten Funkabdeckungsvorhersageinformationselements (201, 202) ein Netzwerk-Slice des Mobilfunknetzes (100) oder eine Kombination von Netzwerk-Slices des Mobilfunknetzes (100) berücksichtigt, wobei insbesondere das zu berücksichtigende Netzwerk-Slice oder die zu berücksichtigenden Netzwerk-Slices auf konfigurierten Werten oder auf der Identität des Benutzergeräts (20) beruhen oder wobei die Funkabdeckungsvorhersageanfrage (250) eine Angabe oder einen Verweis auf das zu berücksichtigende Netzwerk-Slice oder die zu berücksichtigenden Netzwerk-Slices umfasst.

9. Verfahren nach einem der vorhergehenden Ansprüche, wobei die Funkabdeckungsvorhersagefunktion (150) als Teil einer Basisstationsentität oder als Teil einer Vielzahl von Basisstationsentitäten implementiert ist und/oder wobei die Funkabdeckungsvorhersagefunktion (150) nur ein Teilwissen verwendet, insbesondere Informationen nur einer gegebenen Basisstationsentität und ihrer unmittelbaren Nachbarn, insbesondere Nachbarn, die zu einer bestimmten Tracking-Area gehören.

10. Benutzergerät (20) zum Steuern einer Zellmessung und/oder einer Zellauswahl, wobei das Benutzergerät (20) in einem Mobilfunknetz (100) befindlich, mit diesem verbunden oder dort eingebucht ist, wobei das Mobilfunknetz (100) ein Funkzugangsnetz (110) umfasst oder verwendet oder diesem zugehörig oder zugeordnet ist, das eine Vielzahl von Funkzellen (11, 12, 13) und eine Vielzahl von Basisstationsentitäten (111, 112) umfasst, die diese Funkzellen (11, 12, 13) bereitstellen, wobei sich zumindest eine bestimmte Basisstationsentität (111) der Vielzahl von Basisstationsentitäten (111, 112) - ebenso wie die eine oder die Vielzahl von Funkzellen (11, 13), die der bestimmten Basisstationsentität (111) zugeordnet sind oder von dieser bereitgestellt werden - zumindest zeitweise von einer ersten Position zu einer zweiten Position bewegt, **dadurch gekennzeichnet, dass** das Benutzergerät (20) mit einer Funkabdeckungsvorhersagefunktion (150), RCPF, kommunizieren kann, die dazu ausgelegt ist, Informationen darüber bereitzustellen, welche der Funkzellen (11, 12, 13) dem Benutzergerät (20) voraussichtlich zur Verfügung steht, während sich das Benutzergerät (20) zu einem bestimmten Zeitpunkt oder während eines bestimmten Zeitraums an einer bestimmten Position oder in einem bestimmten Bereich befindet,
wobei das Benutzergerät (20) derart konfiguriert ist, dass:
-- das Benutzergerät (20) von der Funkabdeckungsvorhersagefunktion (150) eine Funkabdeckungsvorhersageinformation (200) empfängt, wobei die Funkabdeckungsvorhersageinformation (200) mindestens eine Standortinformation (210), mindestens eine Zeitinformation (220) und mindestens eine Zellinformation (230) umfasst, wobei die mindestens eine Zellinformation (230) - bezogen auf eine bestimmte Funkzelle, die der bestimmten Basisstationsentität (111) zugeordnet ist oder von dieser bereitgestellt wird - zumindest eine Frequenzinformation der bestimmten Funkzelle angibt, wobei sich die Standortinformation (210) auf eine Position oder einen Standort oder einen geografischen Bereich bezieht oder verweist, für den die zugehörige Zellinformation als Teil der Funkabdeckungsvorhersageinformation anwendbar oder gültig ist, wobei sich die Zeitinformation (220) auf einen Zeitpunkt oder Zeitraum bezieht, für den die zugehörige Zellinformation (230) als Teil der Funkabdeckungsvorhersageinformation (200) hinsichtlich der Standortinformation (210), die sowohl auf die Zellinformation (230) als auch auf die Zeitinformation (220) bezogen ist, anwendbar oder gültig ist,
-- der Inhalt der Funkabdeckungsvorhersageinformation (200) vom Benutzergerät (20) verwendet wird, um aus der Vielzahl von Funkzellen (11, 12, 13) eine geeignete Funkzelle zu bestimmen, für die die gemessenen Zellattribute die Zellauswahlkriterien erfüllen.

11. Mobilfunknetz (100) zum Realisieren einer Zellmessung und/oder einer Zellauswahl eines Benutzergeräts (20), das sich in dem Mobilfunknetz (100) befindet, mit diesem verbunden ist oder dort eingebucht ist, wobei das Mobilfunknetz (100) ein Funkzugangsnetz (110) umfasst oder verwendet, das eine Vielzahl von Funkzellen (11, 12, 13) und eine Vielzahl von Basisstationsentitäten (111, 112) umfasst, die diese Funkzellen (11, 12, 13) bereitstellen, wobei sich zumindest eine bestimmte Basisstationsentität (111) der Vielzahl von Basisstationsentitäten (111, 112) - ebenso wie die eine oder die Vielzahl von Funkzellen (11, 13), die der bestimmten Basisstationsentität (111) zugeordnet sind oder von dieser bereitgestellt werden - zumindest zeitweise von einer ersten Position zu einer zweiten Position bewegt, wobei das Mobilfunknetz (100) das Benutzergerät (20) umfasst, **dadurch gekennzeichnet, dass** das Mobilfunknetz (100) ferner eine Funkabdeckungsvorhersagefunktion (150), RCPF, umfasst, die dazu ausgelegt ist, Informationen darüber bereitzustellen, welche der Funkzellen (11, 12, 13) dem Benutzergerät (20) voraussichtlich zur Verfügung steht, während sich das Benutzergerät (20) zu einem bestimmten Zeitpunkt oder während eines bestimmten Zeitraums an einer bestimmten Position oder in einem bestimmten Bereich befindet,
wobei das Mobilfunknetz (100) derart konfiguriert ist, dass:
-- eine Funkabdeckungsvorhersageinformation (200) von der Funkabdeckungsvorhersagefunktion (150) an das Benutzergerät (20) des Mobilfunknetzes (100) übertragen wird, wobei die Funkabdeckungsvorhersageinformation (200) mindestens eine Standortinformation (210), mindestens eine Zeitinformation (220) und mindestens eine Zellinformation (230) umfasst, wobei die mindestens eine Zellinformation (230) - bezogen auf eine bestimmte Funkzelle, die der bestimmten Basisstationsentität (111) zugeordnet ist oder von dieser bereitgestellt wird - zumindest eine Frequenzinformation der bestimmten Funkzelle angibt, wobei sich die Standortinformation (210) auf eine Position oder einen Standort oder einen geografischen Bereich bezieht oder verweist, für den die zugehörige Zellinformation als Teil der Funkabdeckungsvorhersageinformation anwendbar oder gültig ist, wobei sich die Zeitinformation (220) auf einen Zeitpunkt oder Zeitraum bezieht, für den die zugehörige Zellinformation (230) als Teil der Funkabdeckungsvorhersageinformation (200) hinsichtlich der Standortinformation (210), die sowohl auf die Zellinformation (230) als auch auf die Zeitinformation (220) bezogen ist, anwendbar oder gültig ist,
-- der Inhalt der Funkabdeckungsvorhersageinformation (200) vom Benutzergerät (20) verwendet wird, um aus der Vielzahl von Funkzellen (11, 12, 13) eine geeignete Funkzelle zu bestimmen, für die die gemessenen Zellattribute die Zellauswahlkriterien erfüllen.

12. Funkabdeckungsvorhersagefunktion (150) eines Mobilfunknetzes (100), wobei das Mobilfunknetz (100) ein Funkzugangsnetz (110) umfasst oder verwendet, das eine Vielzahl von Funkzellen (11, 12, 13) und eine Vielzahl von Basisstationsentitäten (111, 112) umfasst, die diese Funkzellen (11, 12, 13) bereitstellen, wobei sich zumindest eine bestimmte Basisstationsentität (111) der Vielzahl von Basisstationsentitäten (111, 112) - ebenso wie die eine oder die Vielzahl von Funkzellen (11, 13), die der bestimmten Basisstationsentität (111) zugeordnet sind oder von dieser bereitgestellt werden - zumindest zeitweise von einer ersten Position zu einer zweiten Position bewegt, und wobei die Funkabdeckungsvorhersagefunktion (150), RCPF, dazu ausgelegt ist, Informationen darüber bereitzustellen, welche der Funkzellen (11, 12, 13) dem Benutzergerät (20) voraussichtlich zur Verfügung steht, während sich das Benutzergerät (20) zu einem bestimmten Zeitpunkt oder während eines bestimmten Zeitraums an einer bestimmten Position oder in einem bestimmten Bereich befindet,
wobei die Funkabdeckungsvorhersagefunktion (150) dazu konfiguriert ist, an das Benutzergerät (20) eine Funkabdeckungsvorhersageinformation (200) zu übertragen, wobei die Funkabdeckungsvorhersageinformation (200) mindestens eine Standortinformation (210), mindestens eine Zeitinformation (220) und mindestens eine Zellinformation (230) umfasst, wobei die mindestens eine Zellinformation (230) - bezogen auf eine bestimmte Funkzelle, die der bestimmten Basisstationsentität (111) zugeordnet ist oder von dieser bereitgestellt wird - zumindest eine Frequenzinformation der bestimmten Funkzelle angibt, wobei sich die Standortinformation (210) auf eine Position oder einen Standort oder einen geografischen Bereich bezieht oder verweist, für den die zugehörige Zellinformation als Teil der Funkabdeckungsvorhersageinformation anwendbar oder gültig ist, wobei sich die Zeitinformation (220) auf einen Zeitpunkt oder Zeitraum bezieht, für den die zugehörige Zellinformation (230) als Teil der Funkabdeckungsvorhersageinformation (200) hinsichtlich der Standortinformation (210), die sowohl auf die Zellinformation (230) als auch auf die Zeitinformation (220) bezogen ist, anwendbar oder gültig ist.

13. Programm, das einen computerlesbaren Programmcode umfasst, der, wenn er teilweise auf einem Benutzergerät (20) ausgeführt wird, das Benutzergerät (20) veranlasst, ein Verfahren nach einem der Ansprüche 1 bis 5 durchzuführen.

14. Computerlesbares Medium, das Anweisungen umfasst, die, wenn sie auf einem Benutzergerät (20) ausgeführt werden, das Benutzergerät (20) veranlassen, ein Verfahren nach einem der Ansprüche 1 bis 5 durchzuführen.

## Revendications

1. Procédé de pilotage d'une mesure de cellule et/ou d'une sélection de cellule d'un équipement utilisateur (20) se trouvant dans un réseau de communication mobile (100), connecté à celui-ci ou campant sur celui-ci, dans lequel le réseau de communication mobile (100) comprend ou utilise un réseau d'accès radio (110), ou lui est associé ou attribué, comprenant une pluralité de cellules radio (11, 12, 13) et une pluralité d'entités de station de base (111, 112) fournissant ces cellules radio (11, 12, 13), dans lequel au moins une entité de station de base (111) spécifique parmi la pluralité d'entités de station de base (111, 112) se déplace - ainsi que la ou les cellules radio (11, 13) associées à l'entité de station de base (111) spécifique ou fournies par celle-ci -, au moins temporairement, d'une première position à une deuxième position, **caractérisé en ce que** le réseau de communication mobile (100) comprend en outre une fonction de prédiction de couverture radio (150), RCPF, ou lui est attribué, apte à fournir des informations indiquant laquelle des cellules radio (11, 12, 13) est susceptible d'être disponible pour l'équipement utilisateur (20) lorsque l'équipement utilisateur (20) est situé, à un instant spécifique ou pendant une période spécifique, à une position spécifique ou dans une zone spécifique,
le procédé comprenant les étapes suivantes :
-- dans une première étape, l'équipement utilisateur (20) reçoit, de la fonction de prédiction de couverture radio (150), une information de prédiction de couverture radio (200), l'information de prédiction de couverture radio (200) comprenant au moins une information de localisation (210), au moins une information temporelle (220) et au moins une information de cellule (230),
l'au moins une information de cellule (230) indiquant - en relation avec une cellule radio spécifique associée à l'entité de station de base (111) spécifique ou fournie par celle-ci -, au moins une information de fréquence de la cellule radio spécifique, dans lequel l'information de localisation (210) se rapporte ou renvoie à une position ou un emplacement ou une zone géographique pour lesquels l'information de cellule associée, faisant partie de l'information de prédiction de couverture radio, est applicable ou valable, dans lequel l'information temporelle (220) se rapporte à un instant ou une période pour lesquels l'information de cellule (230) associée, faisant partie de l'information de prédiction de couverture radio (200), est applicable ou valable concernant l'information de localisation (210) qui est liée à la fois à l'information de cellule (230) et à l'information temporelle (220),
-- dans une deuxième étape, le contenu de l'information de prédiction de couverture radio (200) est utilisé, par l'équipement utilisateur (20), pour déterminer une cellule radio appropriée, parmi la pluralité de cellules radio (11, 12, 13), pour laquelle les attributs de cellule mesurés satisfont aux critères de sélection de cellule.

2. Procédé selon la revendication 1, dans lequel, dans le cas où l'équipement utilisateur (20) est incapable de déterminer une cellule radio appropriée parmi la pluralité de cellules radio (11, 12, 13) sur la base du contenu de l'information de prédiction de couverture radio (200) - en particulier de l'au moins une information de cellule (230), comprenant au moins une information de fréquence ou comprenant une information de fréquence et une information nécessaire pour adresser la cellule radio -, l'équipement utilisateur (20) effectue des mesures en vue de la sélection de cellule en appliquant une approche initiale de sélection de cellule consistant à balayer les canaux de radiofréquence disponibles, en particulier tous les canaux de radiofréquence dans les bandes de fréquences autorisées et/ou accessibles et/ou disponibles pour l'équipement utilisateur (20).

3. Procédé selon l'une des revendications précédentes, dans lequel l'équipement utilisateur (20) reçoit l'information de prédiction de couverture radio (200) en réponse à une demande de prédiction de couverture radio (250) précédente, émise par l'équipement utilisateur (20), dans lequel, au moyen de la demande de prédiction de couverture radio, l'équipement utilisateur (20) demande à la fonction de prédiction de couverture radio (150) de fournir une information de prédiction de couverture radio, en particulier concernant
-- une autre position spécifique ou une autre zone spécifique de l'équipement utilisateur (20),
-- ou, en variante, concernant une autre position spécifique ou une autre zone spécifique de l'équipement utilisateur (20) et à un autre instant spécifique ou pendant une autre période spécifique.

4. Procédé selon l'une des revendications précédentes, dans lequel l'information de prédiction de couverture radio (200) comprend au moins un premier élément d'information de prédiction de couverture radio (201) comprenant une première information de localisation (211), une première information temporelle (221) et une première information de cellule (231),
la première information de cellule (231) se rapportant à au moins une première cellule radio (11) parmi la pluralité de cellules radio (11, 12, 13), dans lequel une cellule radio ou des cellules radio auxquelles renvoie la première information de cellule (231) est ou sont utilisées, par l'équipement utilisateur (20), comme candidat de sélection de cellule ou candidats de sélection de cellule pour déterminer si la première cellule radio (11) est une cellule radio appropriée, en particulier dans le cas où la position spécifique ou la zone spécifique de l'équipement utilisateur (20) correspond ou correspond au moins approximativement à la position ou à la zone à laquelle renvoie la première information de localisation (211), et l'instant spécifique ou la période spécifique de l'équipement utilisateur (20) correspond ou correspond au moins approximativement à l'instant ou à la période auquel ou à laquelle renvoie la première information temporelle (221),
et/ou
dans lequel l'information de prédiction de couverture radio (200) comprend un deuxième élément d'information de prédiction de couverture radio (202) comprenant une deuxième information de localisation (212), une deuxième information temporelle (222) et une deuxième information de cellule (232),
la deuxième information de cellule (232) se rapportant à au moins une deuxième cellule radio (12) parmi la pluralité de cellules radio (11, 12, 13), dans lequel une cellule radio ou des cellules radio auxquelles renvoie la deuxième information de cellule (232) est ou sont utilisées, par l'équipement utilisateur (20), comme candidat de sélection de cellule ou candidats de sélection de cellule pour déterminer si la deuxième cellule radio (12) est une cellule radio appropriée dans le cas où la position spécifique ou la zone spécifique de l'équipement utilisateur (20) correspond ou correspond au moins approximativement à la position ou à la zone à laquelle renvoie la deuxième information de localisation (212), et l'instant spécifique ou la période spécifique de l'équipement utilisateur (20) correspond ou correspond au moins approximativement à l'instant ou à la période auquel ou à laquelle renvoie la deuxième information temporelle (222).

5. Procédé selon la revendication 4, dans lequel l'entité de station de base (111) spécifique se déplace de la première position à un premier instant considéré à la deuxième position à un deuxième instant considéré, dans lequel la ou les cellules radio (11, 13) associées à l'entité de station de base (111) spécifique ou fournies par celle-ci, ou une partie de celles-ci, font l'objet d'un renvoi par la première information de cellule (231) dans le cas où la première position et le premier instant considéré correspondent ou correspondent au moins approximativement à la position ou à la zone à laquelle renvoie la première information de localisation (211) et à l'instant ou à la période auquel ou à laquelle renvoie la première information temporelle (221), et dans lequel, en particulier, la ou les cellules radio (11, 13) associées à l'entité de station de base (111) spécifique ou fournies par celle-ci, ou une partie de celles-ci, font l'objet d'un renvoi par la deuxième information de cellule (232) dans le cas où la deuxième position et le deuxième instant considéré correspondent ou correspondent au moins approximativement à la position ou à la zone à laquelle renvoie la deuxième information de localisation (212) et à l'instant ou à la période auquel ou à laquelle renvoie la deuxième information temporelle (222).

6. Procédé selon la revendication 4 ou 5, dans lequel l'information de prédiction de couverture radio (200) et/ou les premier et deuxième éléments d'information de prédiction de couverture radio (201, 202) sont générés en tenant compte d'au moins une partie des éléments suivants :
-- la distance entre l'entité de station de base respective et la position ou l'emplacement auquel renvoie la première et/ou la deuxième information de localisation ou de position (211, 212),
-- la perte de propagation radio respective,
-- la puissance rayonnée de l'entité de station de base respective pour une cellule radio respective,
-- le gain d'antenne, la configuration d'antenne et/ou l'orientation d'antenne de l'entité de station de base respective,
-- le trajet et/ou l'itinéraire de l'entité de station de base respective et/ou de l'équipement utilisateur connu de la fonction de prédiction de couverture (150).

7. Procédé selon l'une des revendications 4 à 6, dans lequel l'information de prédiction de couverture radio (200) et/ou les premier et deuxième éléments d'information de prédiction de couverture radio (201, 202) sont transmis selon l'une des modalités suivantes :
-- par transmission spécifique à l'équipement utilisateur (20),
-- par diffusion à l'équipement utilisateur (20) et à d'autres équipements utilisateurs non spécifiés, ou
-- par multidiffusion à l'équipement utilisateur (20) et à un groupe spécifique d'autres équipements utilisateurs.

8. Procédé selon l'une des revendications 4 à 7, dans lequel, lors de la génération de l'information de prédiction de couverture radio (200) et/ou des premier et deuxième éléments d'information de prédiction de couverture radio (201, 202), la fonction de prédiction de couverture (150) tient compte d'une tranche de réseau du réseau de communication mobile (100) ou d'une combinaison de tranches de réseau du réseau de communication mobile (100), dans lequel, en particulier, la ou les tranches de réseau à prendre en compte sont basées sur des valeurs configurées ou sur l'identité de l'équipement utilisateur (20), ou dans lequel la demande de prédiction de couverture radio (250) comprend une indication ou une référence à la ou aux tranches de réseau à prendre en compte.

9. Procédé selon l'une des revendications précédentes, dans lequel la fonction de prédiction de couverture radio (150) est mise en œuvre en tant que partie d'une entité de station de base ou en tant que partie d'une pluralité d'entités de station de base, et/ou dans lequel la fonction de prédiction de couverture radio (150) n'utilise qu'une connaissance partielle, en particulier des informations d'une seule entité de station de base donnée et de ses voisines immédiates, en particulier de voisines appartenant à une zone de suivi spécifique.

10. Équipement utilisateur (20) destiné au pilotage d'une mesure de cellule et/ou d'une sélection de cellule, l'équipement utilisateur (20) se trouvant dans un réseau de communication mobile (100), étant connecté à celui-ci ou campant sur celui-ci, le réseau de communications mobile (100) comprenant ou utilisant un réseau d'accès radio (110), ou lui étant associé ou attribué, comprenant une pluralité de cellules radio (11, 12, 13) et une pluralité d'entités de station de base (111, 112) fournissant ces cellules radio (11, 12, 13), dans lequel au moins une entité de station de base (111) spécifique parmi la pluralité d'entités de station de base (111, 112) se déplace - ainsi que la ou les cellules radio (11, 13) associées à l'entité de station de base (111) spécifique ou fournies par celle-ci -, au moins temporairement, d'une première position à une deuxième position, **caractérisé en ce que** l'équipement utilisateur (20) est apte à communiquer avec une fonction de prédiction de couverture radio (150), RCPF, apte à fournir des informations indiquant laquelle des cellules radio (11, 12, 13) est susceptible d'être disponible pour l'équipement utilisateur (20) lorsque l'équipement utilisateur (20) est situé, à un instant spécifique ou pendant une période spécifique, à une position spécifique ou dans une zone spécifique,
dans lequel l'équipement utilisateur (20) est configuré de telle sorte que :
-- l'équipement utilisateur (20) reçoit, de la fonction de prédiction de couverture radio (150), une information de prédiction de couverture radio (200), l'information de prédiction de couverture radio (200) comprenant au moins une information de localisation (210), au moins une information temporelle (220) et au moins une information de cellule (230),
l'au moins une information de cellule (230) indiquant - en relation avec une cellule radio spécifique associée à l'entité de station de base (111) spécifique ou fournie par celle-ci -, au moins une information de fréquence de la cellule radio spécifique, dans lequel l'information de localisation (210) se rapporte ou renvoie à une position ou un emplacement ou une zone géographique pour lesquels l'information de cellule associée, faisant partie de l'information de prédiction de couverture radio, est applicable ou valable, dans lequel l'information temporelle (220) se rapporte à un instant ou une période pour lesquels l'information de cellule (230) associée, faisant partie de l'information de prédiction de couverture radio (200), est applicable ou valable concernant l'information de localisation (210) qui est liée à la fois à l'information de cellule (230) et à l'information temporelle (220),
-- le contenu de l'information de prédiction de couverture radio (200) est utilisé, par l'équipement utilisateur (20), pour déterminer une cellule radio appropriée, parmi la pluralité de cellules radio (11, 12, 13), pour laquelle les attributs de cellule mesurés satisfont aux critères de sélection de cellule.

11. Réseau de communication mobile (100) destiné à la réalisation d'une mesure de cellule et/ou d'une sélection de cellule d'un équipement utilisateur (20) se trouvant dans le réseau de communication mobile (100), connecté à celui-ci ou campant sur celui-ci, dans lequel le réseau de communication mobile (100) comprend ou utilise un réseau d'accès radio (110) comprenant une pluralité de cellules radio (11, 12, 13) et une pluralité d'entités de station de base (111, 112) fournissant ces cellules radio (11, 12, 13), dans lequel au moins une entité de station de base (111) spécifique parmi la pluralité d'entités de station de base (111, 112) se déplace - ainsi que la ou les cellules radio (11, 13) associées à l'entité de station de base (111) spécifique ou fournies par celle-ci -, au moins temporairement, d'une première position à une deuxième position, dans lequel le réseau de communication mobile (100) comprend l'équipement utilisateur (20), **caractérisé en ce que** le réseau de communication mobile (100) comprend en outre une fonction de prédiction de couverture radio (150), RCPF, apte à fournir des informations indiquant laquelle des cellules radio (11, 12, 13) est susceptible d'être disponible pour l'équipement utilisateur (20) lorsque l'équipement utilisateur (20) est situé, à un instant spécifique ou pendant une période spécifique, à une position spécifique ou dans une zone spécifique,
dans lequel le réseau de communication mobile (100) est configuré de telle sorte que :
-- une information de prédiction de couverture radio (200) est transmise, de la fonction de prédiction de couverture radio (150) à l'équipement utilisateur (20) du réseau de communication mobile (100), l'information de prédiction de couverture radio (200) comprenant au moins une information de localisation (210), au moins une information temporelle (220) et au moins une information de cellule (230), l'au moins une information de cellule (230) indiquant - en relation avec une cellule radio spécifique associée à l'entité de station de base (111) spécifique ou fournie par celle-ci -, au moins une information de fréquence de la cellule radio spécifique, dans lequel l'information de localisation (210) se rapporte ou renvoie à une position ou un emplacement ou une zone géographique pour lesquels l'information de cellule associée, faisant partie de l'information de prédiction de couverture radio, est applicable ou valable, dans lequel l'information temporelle (220) se rapporte à un instant ou une période pour lesquels l'information de cellule (230) associée, faisant partie de l'information de prédiction de couverture radio (200), est applicable ou valable concernant l'information de localisation (210) qui est liée à la fois à l'information de cellule (230) et à l'information temporelle (220),
-- le contenu de l'information de prédiction de couverture radio (200) est utilisé, par l'équipement utilisateur (20), pour déterminer une cellule radio appropriée, parmi la pluralité de cellules radio (11, 12, 13), pour laquelle les attributs de cellule mesurés satisfont aux critères de sélection de cellule.

12. Fonction de prédiction de couverture radio (150) d'un réseau de communication mobile (100), le réseau de communication mobile (100) comprenant ou utilisant un réseau d'accès radio (110) comprenant une pluralité de cellules radio (11, 12, 13) et une pluralité d'entités de station de base (111, 112) fournissant ces cellules radio (11, 12, 13), dans laquelle au moins une entité de station de base (111) spécifique parmi la pluralité d'entités de station de base (111, 112) se déplace - ainsi que la ou les cellules radio (11, 13) associées à l'entité de station de base (111) spécifique ou fournies par celle-ci -, au moins temporairement, d'une première position à une deuxième position, et la fonction de prédiction de couverture radio (150), RCPF, étant apte à fournir des informations indiquant laquelle des cellules radio (11, 12, 13) est susceptible d'être disponible pour l'équipement utilisateur (20) lorsque l'équipement utilisateur (20) est situé, à un instant spécifique ou pendant une période spécifique, à une position spécifique ou dans une zone spécifique,
la fonction de prédiction de couverture radio (150) étant configurée pour transmettre, à l'équipement utilisateur (20), une information de prédiction de couverture radio (200), l'information de prédiction de couverture radio (200) comprenant au moins une information de localisation (210), au moins une information temporelle (220) et au moins une information de cellule (230), l'au moins une information de cellule (230) indiquant - en relation avec une cellule radio spécifique associée à l'entité de station de base (111) spécifique ou fournie par celle-ci -, au moins une information de fréquence de la cellule radio spécifique, dans laquelle l'information de localisation (210) se rapporte ou renvoie à une position ou un emplacement ou une zone géographique pour lesquels l'information de cellule associée, faisant partie de l'information de prédiction de couverture radio, est applicable ou valable, dans laquelle l'information temporelle (220) se rapporte à un instant ou une période pour lesquels l'information de cellule (230) associée, faisant partie de l'information de prédiction de couverture radio (200), est applicable ou valable concernant l'information de localisation (210) qui est liée à la fois à l'information de cellule (230) et à l'information temporelle (220).

13. Programme comprenant un code de programme lisible par ordinateur qui, lorsqu'il est exécuté en partie sur un équipement utilisateur (20), amène l'équipement utilisateur (20) à mettre en œuvre un procédé selon l'une des revendications 1 à 5.

14. Support lisible par ordinateur comprenant des instructions qui, lorsqu'elles sont exécutées sur un équipement utilisateur (20), amènent l'équipement utilisateur (20) à mettre en œuvre un procédé selon l'une des revendications 1 à 5.
